# EUROPÄISCHE PATENTSCHRIFT

(11) **EP 2 013 503 B1**
(45) Veröffentlichungstag und Bekanntmachung des Hinweises auf die Patenterteilung: **08.06.2011**
(21) Anmeldenummer: 07728467.7
(22) Anmeldetag: 25.04.2007
(51) Int. Cl.: F16D 48/06

(54) **VERFAHREN ZUR ERMITTLUNG EINER DREHMOMENTKENNLINIE EINER AUTOMATISIERTEN REIBUNGSKUPPLUNG**
METHOD FOR DETERMINING A TORQUE CHARACTERISTIC OF AN AUTOMATED FRICTION CLUTCH
PROCÉDÉ POUR DÉTERMINER UNE COURBE CARACTÉRISTIQUE DE COUPLE DE ROTATION D'UN EMBRAYAGE À FRICTION AUTOMATIQUE

(30) Priorität: 28.04.2006 DE 102006019824
(43) Veröffentlichungstag der Anmeldung: 14.01.2009
(73) Patentinhaber: ZF Friedrichshafen AG, 88038 Friedrichshafen (DE)
(72) Erfinder: PETZOLD, Rainer, 88045 Friedrichshafen (DE); HERTER, Peter, 88212 Ravensburg (DE); BITZER, Franz, 88048 Friedrichshafen (DE)
(86) Internationale Anmeldenummer: PCT/EP2007/054011
(87) Internationale Veröffentlichungsnummer: WO 2007/125062

(56) Entgegenhaltungen:
- EP-A- 1 741 950
- DE-A1- 10 032 366
- DE-A1- 19 915 207

## Beschreibung

Die Erfindung betrifft ein Verfahren zur Ermittlung einer Drehmoment-kennlinie einer automatisierten Reibungskupplung nach den Oberbegriff des Anspruchs 1. Ein gattungsgemäßes Verfahren ist aus DE-A-19 915 207 bekannt.

Die Erfindung bezieht sich auf alle möglichen Bauarten von Reibungskupptungen, sofern diese im Ruhezustand geschlossen sind. Eine allgemein bekannte Bauform, bei der das erfindungsgemäße Verfahren bevorzugt zur Anwendung kommen soll, ist eine durch die Wirkung einer Anpressfeder passiv schließbare und über einen druckmittelbetätigten oder elektromotorisch oder elektromagnetisch wirksamen Kupplungssteller aus- und einrückbare Trockenkupplung. Eine andere mögliche Bauform ist eine durch die Anpresskraft eines steuerbaren Anpresselementes aktiv schließbare Trockenkupplung, die im Ruhezustand, also bei mit abgestelltem Antriebsmotor geparktem Kraftfahrzeug, über ein Anpresselement durch die Beaufschlagung mit Energie, z.B. mit Druckluft aus einem pneumatischen Druckspeicher, geschlossen gehalten wird. Ebenso ist das erfindungsgemäße Verfahren auf eine aktiv oder passiv schließbare Nasskupplung, insbesondere eine Lamellenkupplung, anwendbar.

Bei derartigen Reibungskupplungen besteht grundsätzlich das Problem, eine Drehmomentkennlinie M_K = f (x_K) zu ermitteln, welche das übertragbare Drehmoment M_K der Reibungskupplung als Funktion des Stellweges x_K eines zugeordneten Kupplungsstellers, wie z.B. eines hydraulischen oder pneumatischen Stellzylinders, oder eines mit diesem verbundenen Übertragungselementes, wie eines Ausrückhebels oder eines Ausrücklagers, wiedergibt, über den das gewünschte übertragbare Drehmoment der Reibungskupplung eingestellt wird.

Ohne eine Einschränkung der Erfindung auf diese Bauart wird nachfolgend beispielhaft von einer weggesteuerten Trockenkupplung mit Federanpressung ausgegangen, die über einen zugeordneten Kupplungssteller aus- und einrückbar ist. Die betreffende Drehmomentkennlinie M_K = f (x_K) gibt in diesem Fall das Kupplungsmoment M_K als Funktion eines dem Ausrückweg entsprechenden Stellweges x_K des Kupplungsstellers wieder. Da sich bekanntlich die jeweils bestimmten Werten des Kupptungsmomentes M_K zugeordneten Stellpositionen x_K abhängig von der Betriebstemperatur und dem Verschleißzustand, insbesondere der Reibbeläge der Reibungskupplung, ändern können, ist für eine exakte Betätigungssteuerung der Reibungskupplung die genaue Ermittlung einer jeweils aktuellen, also den momentanen Betriebsbedingungen entsprechenden Drehmomentkennlinie M_K = f (x_K) erforderlich.

Hierzu ist es bekannt, mindestens zwei Stützstellen M_K1(x_K1) und M_K2(x_K2) der Drehmomentkennlinie M_K = f (x_K) zu bestimmen, von denen mindestens eine Stützstelle an einer Schlupfgrenze der Reibungskupplung ermittelt wird. Die gesamte Drehmomentkennlinie M_K = f (x_K) kann dann durch eine Adaption einer vorhandenen Drehmomentkennlinie M_K = f (x_K) mittels Abbildung der betreffenden Drehmomentwerte M_K1 (x_K1') und M_K2(x_K2') auf die aktuell ermittelten Stützstellen M_K1 (x_K1) sowie M_K2(x_K2) gewonnen werden.

Dabei wird bislang zumindest eine der Stützstellen an einer Schlupfgrenze ermittelt, indem bei geschlossener Reibungskupplung, in Neutral geschaltetem Fahrgetriebe und laufendem Antriebsmotor die Reibungskupplung zuerst vollständig geöffnet wird, dann so lange gewartet wird, bis die Drehzahl der Eingangswelle des Fahrgetriebes gegenüber der Drehzahl des Antriebsmotors weit genug abgefallen ist, und schließlich die Reibungskupplung langsam so weit geschlossen wird, bis ein Anstieg der Drehzahl der Eingangswelle sensiert wird.

Das zu diesem Zeitpunkt ermittelte Wertepaar M_K1, x_K1 mit dem bekannten Bremsmoment M_B der Eingangswelle (M_K1 = M_B) und der erfassten Stellposition x_K(M_B) wird dann als Wertepaar der Stützstelle M_K1 (x_K1) abgespeichert und für die Adaption einer vorhandenen Kennlinie M_K' = f (x_K) verwendet.

Das Bremsmoment M_B und damit der betreffende Drehmomentwert M_K1 ist in diesem Fall relativ klein und entspricht dem Schleppmoment der Eingangswelle, das durch Lagerreibung, Wälzverluste von kämmenden Zahnrädern und Ölpanschverluste der Eingangswelle und der mit dieser in Verbindung stehenden Bauteile verursacht wird. Das Schleppmoment ist zudem stark temperaturabhängig und steigt mit abnehmender Betriebstemperatur, insbesondere der Öltemperatur des Fahrgetriebes an. Nachteilig an diesem bekannten Verfahren zur Ermittlung einer Drehmomentkennlinie ist die hohe Anzahl der erforderlichen Verfahrensschritte, die relativ lange Dauer des Verfahrensablaufs, die zu Verzögerungen im normalen Fahrbetrieb des Kraftfahrzeugs führen kann, sowie die relativ große Ungenauigkeit bei der Ermittlung der Stützstellen.

Der Erfindung liegt daher die Aufgabe zugrunde, ein Verfahren zur Ermittlung einer Drehmomentkennlinie einer automatisierten Reibungskupplung der eingangs genannten Art anzugeben, mit dem zumindest eine der Stützstellen M_K1(x_K1), M_K2(x_K2) der Drehmomentkennlinie M_K = f (x_K) einfacher, schneller und mit höherer Genauigkeit ermittelt werden kann.

Die Lösung dieser Aufgabe ergibt sich aus den Merkmalen des Hauptanspruchs, während vorteilhafte Ausgestaltungen der Erfindung den Unteransprüchen entnehmbar sind.

Die Erfindung betrifft demnach ein Verfahren zur Ermittlung einer Drehmomentkennlinie einer automatisierten Reibungskupplung, die in einem Antriebsstrang eines Kraftfahrzeugs im Kraftfluss zwischen einem Antriebsmotor und einem Fahrgetriebe angeordnet und im Ruhezustand geschlossen ist, wobei mindestens zwei Stützstellen M_K1(x_K1) und M_K2(x_K2) einer stellwegabhängigen Drehmomentkennlinie M_K = f (x_K) bestimmt werden, von denen mindestens eine Stützstelle an einer Schlupfgrenze der Reibungskupplung ermittelt wird.

Die Ermittlung der Stützstelle M_K1 (x_K1) erfolgt somit schon während des Öffnungsvorgangs der Reibungskupplung, z.B. bei einer Inbetriebnahme des Kraftfahrzeugs nach dem Motorstart sowie noch vor dem Einlegen des Anfahrgangs, und damit wesentlich schneller als bislang üblich.

Da das bei der Ermittlung der ersten Stützstelle M_K1 (x_K1) als Bremsmoment M_B auf die Eingangswelle wirksame Schleppmoment im wesentlichen temperaturabhängig ist, also mit sinkender Betriebstemperatur des Fahrgetriebes ansteigt, wird zur genauen Ermittlung des Schleppmomentes zweckmäßig die Betriebstemperatur des Fahrgetriebes sensiert.

Die Ermittlung der ersten Stützstelle M_K1(x_K1) kann des Weiteren dadurch beschleunigt werden, dass spätestens vor Erreichen der Schlupfgrenze der Reibungskupplung zusätzlich eine auf die Eingangswelle des Fahrgetriebes wirksame Getriebebremse oder eine Synchronisiervorrichtung einer Gangstufe des Fahrgetriebes betätigt wird. In diesem Fall wird das auf die Eingangswelle des Fahrgetriebes wirksame Bremsmoment M_B durch die Summe aus dem Schleppmoment und dem Bremsmoment der Getriebebremse bzw. der Synchronisiervorrichtung gebildet. Demzufolge ist der ermittelte Drehmomentwert M_K1 in diesem Fall größer, jedoch aufgrund einer geringeren Auswirkung der Betriebstemperatur und von Messfehlern genauer bestimmbar.

Eine zweite Stützstelle M_K2(x_K2) wird bevorzugt derart ermittelt, dass die Reibungskupplung im geschlossenen Zustand so lange in Richtung Schließen betätigt wird, bis keine Änderung des Stellweges x_K mehr sensiert wird, und dass dann das entsprechende Wertepaar M_K2, x_K2 mit dem bekannten Maximalmoment M_K_max und der ermittelten Stellposition x_K = 0 erfasst, als Wertepaar der zweiten Stützstelle M_K2(x_K2) abgespeichert und nachfolgend für die Adaption der vorhandenen Kennlinie M_K' = f (x_K) verwendet wird.

Der Wegbereich zwischen den beiden derart ermittelten Stützstellen M_K1(x_K1) und M_K2(x_K2) wird zweckmäßig als Arbeitsbereich der Reibungskupplung zur Einstellung von Drehmomentwerten M_Ki(x_Ki) mit M_K1(x_K1) = 0% und M_K2(x_K2) = 100% definiert. Hierdurch ist dann eine genaue Einstellung eines gewünschten diskreten Drehmomentwertes M_Ki sowie eines gewünschten Zeitverlaufs des Kupplungsmomentes M_K, beispielsweise zum Anfahren, Rangieren, Schalten und Anhalten möglich.

Zur Verdeutlichung der Erfindung ist der Beschreibung eine Zeichnung beigefügt.

In dieser zeigt:
- Fig. 1: ein Diagramm des Kupplungsmomentes einer Reibungskupp- lung über dem Stellweg und
- Fig. 2: eine Kupplungsanordnung zur Anwendung des erfindungsgemä- ßen Verfahrens.

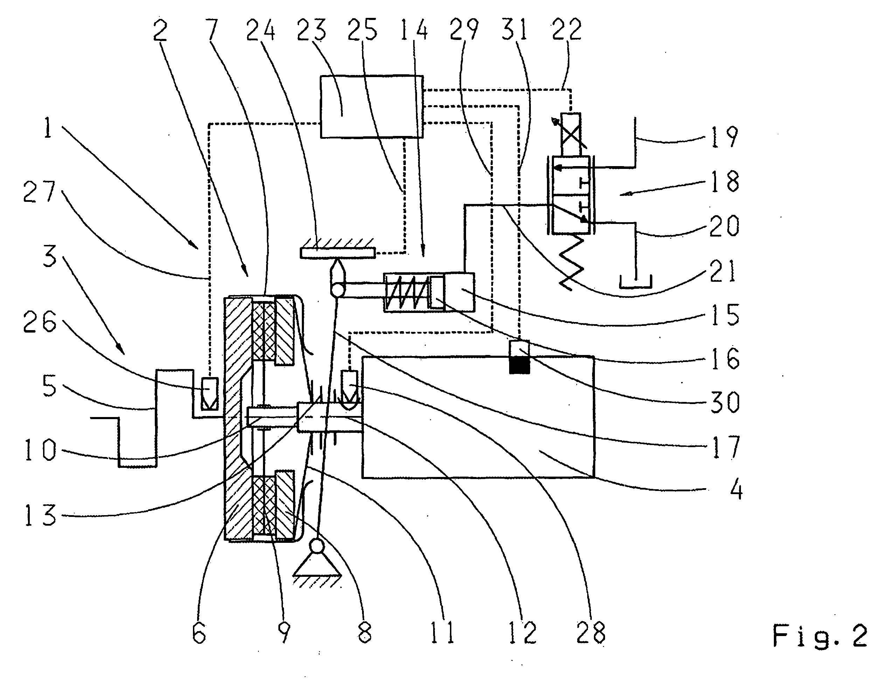

In Fig. 2 ist beispielhaft eine Kupplungsanordnung 1 zur Anwendung des erfindungsgemäßen Verfahrens abgebildet. Dort ist eine als Einscheiben-Trockenkupplung ausgebildete Reibungskupplung 2 im Kraftfluss zwischen einem als Verbrennungskolbenmotor ausgebildeten Antriebsmotor 3 und einem Fahrgetriebe 4 angeordnet.

Der eingangsseitige Teil der Reibungskupplung 2 wird von einem an der Kurbelwelle 5 des Antriebsmotors 3 befestigten Schwungrad 6 und einer über einen Kupplungskorb 7 mit diesem verbundenen Druckplatte 8 gebildet. Der ausgangsseitige Teil der Reibungskupplung 2 ist durch eine axial zwischen dem Schwungrad 6 und der Druckplatte 8 angeordneten Mitnehmerscheibe 9 gebildet, die drehfest und axial verschiebbar auf der Eingangswelle 10 des Fahrgetriebes 4 gelagert ist. Durch eine zwischen dem Kupplungskorb 7 und der Druckplatte 8 angeordnete, als Membranfeder ausgebildete Anpressfeder 11 ist die Reibungskupplung 2 im stellkraftfreien Ruhezustand geschlossen, und über ein auf einer gehäusefesten Führungshülse 12 axialbeweglich gelagertes und an radial inneren Federzungen der Anpressfeder 11 anliegendes Ausrücklager 13 aus- und einrückbar.

Die Betätigung des Ausrücklagers 13 und damit die Einstellung eines bestimmten Kupplungsmomentes M_K der Reibungskupplung 2 erfolgt über einen druckmittelbetätigten Kupplungssteller 14, der vorliegend als ein einfach wirksamer Stellzylinder mit einem axialbeweglich gelagerten und durch einen in einem Druckraum 15 wirksamen Stelldruck p_K gegen die Rückstellkraft einer Rückstellfeder verschiebbaren Kolben 16 ausgebildet ist. Der Kolben 16 steht über eine Kolbenstange und einen endseitig gehäusefest gelagerten Ausrückhebel 17 derart mit dem Ausrücklager 13 in Verbindung, dass ein ansteigender Stelldruck p_K zu einem Ausrücken der Reibungskupplung 2 und somit zu einer Verringerung des Kupplungsmomentes M_K führt.

Die Ansteuerung des Kupplungsstellers 14 erfolgt über ein Steuerungsventil 18, das vorliegend als ein 3/2-Wege-Proportionalmagnetventil mit zwei Eingängen und einem Ausgang ausgebildet ist, wobei der erste Eingang mit einer Druckleitung 19, der zweite Eingang mit einer Drucklosleitung 20 und der Ausgang über eine Verbindungsleitung 21 mit dem Druckraum 15 des Kupplungsstellers 14 verbunden ist. Zur Ansteuerung des Steuerungsventils 18 steht dieses über eine elektrische Steuerleitung 22 mit einem Steuergerät 23 in Verbindung. Eine Änderung des Kupplungsmomentes M_K erfolgt somit bauartbedingt durch eine kontinuierliche Änderung des Stelldruckes p_K des Kupplungsstellers 14.

Zur Erfassung der Stellposition x_K des Kolbens 16 bzw. des Ausrückhebels 17 ist an der Kolbenstange des Kolbens 16 ein Wegsensor 24 angeordnet. Zur Ermittlung der Eingangsdrehzahl der Reibungskupplung 2 ist ein erster Drehzahlsensor 26 an der Kurbelwelle 5 des Antriebsmotors 3 angeordnet, während zur Bestimmung der Ausgangsdrehzahl der Reibungskupplung 2 ein zweiter Drehzahlsensor 28 an der Eingangswelle 10 des Fahrgetriebes 4 vorgesehen ist. Zur Erfassung der Betriebstemperatur des Fahrgetriebes 4 ist ein Temperatursensor 30 im Ölsumpf des Fahrgetriebes 4 angeordnet. Die genannten Sensoren 24, 26, 28, 30 stehen jeweils über eine zugeordnete Sensorleitung 25, 27, 29, 31 mit dem Steuergerät 23 in Verbindung.

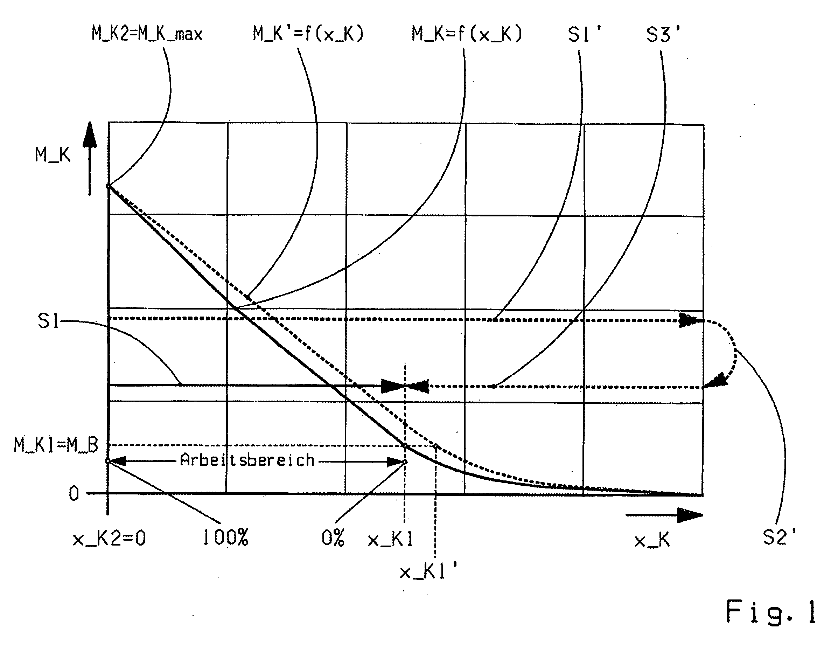

In dem Diagramm von Fig. 1 ist für die Kupplungsanordnung 1 gemäß Fig. 2 eine stellwegabhängige Drehmomentkennlinie M_K = f (x_K) mit dem Verlauf des Kupplungsmomentes M_K über dem Stellweg x_K dargestellt (durchgezogene Linie), die aus einer Adaption einer vorhandenen Drehmomentkennlinie M_K' = f (x_K) durch die Abbildung von zwei Drehmomentwerten M_K1(x_K1'), M_K2(x_K2') der vorhandenen Kennlinie M_K' = f (x_K) auf zwei ermittelte Stützstellen M_K1(x_K1) und M_K2(x_K2) gewonnen wird.

Bisher ist es zur Ermittlung einer ersten Stützstelle M_K1 (x_K1) der Drehmomentkennlinie M_K = f (x_K) üblich, dass bei geschlossener Reibungskupplung 2, in Neutral geschaltetem Fahrgetriebe 4 und bei laufendem Antriebsmotor 3 die Reibungskupplung 2 zuerst vollständig geöffnet wird, dann so lange gewartet wird, bis die Drehzahl der Eingangswelle 10 des Fahrgetriebes 4 gegenüber der Drehzahl des Antriebsmotors 3 weit genug abgefallen ist, und dass dann die Reibungskupplung 2 langsam so weit geschlossen wird, bis ein Anstieg der Drehzahl der Eingangswelle 10 sensiert wird. Das zu diesem Zeitpunkt ermittelte Wertepaar M_K1, x_K1 mit dem bekannten Bremsmoment M_B der Eingangswelle (M_K1 = M_B) und der erfassten Stellposition x_K(M_B) wird dann als Wertepaar der Stützstelle M_K1 (x_K1) abgespeichert und für die Adaption bzw. Anpassung der vorhandenen Kennlinie M_K' = f(x_K) verwendet. Dieses bekannte Verfahren, das in Fig. 1 durch die Schritte S1' bis S3' veranschaulicht ist, nimmt relativ viel Zeit in Anspruch und erfordert einen hohen Steuerungsaufwand.

Demgegenüber ist bei dem erfindungsgemäßen Verfahren vorgesehen, dass bei geschlossener Reibungskupplung 2, in Neutral geschaltetem Fahrgetriebe 4 und bei laufendem Antriebsmotor 3 zur Ermittlung einer ersten Stützstelle M_K1 (x_K1) der Drehmomentkennlinie M_K = f (x_K) die Reibungskupplung 2 langsam so weit geöffnet wird, bis ein Abfallen der Drehzahl der Eingangswelle 10 des Fahrgetriebes 4 gegenüber der Drehzahl des Antriebsmotors 3 sensiert wird, und dass dann das entsprechende Wertepaar M_K1, x_K1 mit dem bekannten Bremsmoment M_B der Eingangswelle (M_K1 = M_B) und der ermittelten Stellposition x_K(M_B) erfasst, als Wertepaar der Stützstelle M_K1 (x_K1) abgespeichert und für die Adaption der vorhandenen Kennlinie M_K' = f (x_K) verwendet wird. Das erfindungsgemäße Verfahren, das in Fig. 1 durch den einzigen Schritt S1 (symbolisiert durch den mit durchgezogener Linie gezeichneten Pfeil) veranschaulicht ist, nimmt einen deutlich kürzeren Zeitraum in Anspruch und erfordert einen geringeren Steuerungsaufwand.

Das Bremsmoment M_B der Eingangswelle 10 und damit der betreffende Drehmomentwert M_K1 entspricht ohne weitere Maßnahmen dem Schleppmoment der Eingangswelle 10. Dieses Schleppmoment ist vergleichsweise klein und zudem stark temperaturabhängig, so dass es nur relativ ungenau bestimmt werden kann. Das Schleppmoment der Eingangswelle 10 kann jedoch mit höherer Genauigkeit bestimmt werden, wenn die Betriebstemperatur des Fahrgetriebes 4, wie in Fig. 2 gezeigt, mit einem möglichst im Ölsumpf des Fahrgetriebes 4 angeordneten Temperatursensor 30 ermittelt wird.

In Abhängigkeit des Schleppmoments kann die gemessene Stützstelle M_K1 (x_K1) korrigiert werden.

Eine weitere Steigerung der Genauigkeit bei der Bestimmung des wirksamen Bremsmomentes M_B kann durch eine Erhöhung desselben erzielt werden, da sich dann Messfehler weniger stark auswirken. Hierzu kann vorgesehen sein, dass spätestens vor Erreichen der Schlupfgrenze, also vor dem Abfallen der Drehzahl der Eingangswelle 10, zusätzlich eine auf die Eingangswelle 10 des Fahrgetriebes 4 wirksame Getriebebremse oder eine Synchronisiervorrichtung einer Gangstufe des Fahrgetriebes 4 betätigt wird.

Eine zweite Stützstelle M_K2(x_K2) wird vorliegend derart ermittelt, dass die Reibungskupplung 2 im geschlossenen Zustand so lange in Richtung Schließen betätigt wird, bis keine Änderung des Stellweges x_K mehr sensiert wird, und dass dann das entsprechende Wertepaar M_K2, x_K2 mit dem bekannten Maximalmoment M_K_max und der ermittelten Stellposition x_K(M_K_max) bzw. x_K = 0 erfasst, anschließend als Wertepaar der Stützstelle M_K2(x_K2) abgespeichert und nachfolgend für die Adaption der vorhandenen Kennlinie M_K' = f (x_K) verwendet wird.

Der Wegbereich zwischen den ermittelten Stützstellen M_K1 (x_K1) und M_K2(x_K2) kann, wie in Fig. 1 mit der Bezeichnung der Stellpositionen x_K1, x_K2 der Stützstellen mit 0 % bzw. 100 % veranschaulicht ist, als Arbeitsbereich der Reibungskupplung 2 definiert werden, da in diesem für den praktischen Betrieb relevanten Bereich das Drehmoment der Reibungskupplung 2 mit hoher Genauigkeit einstellbar ist.

### Bezugszeichen

- 1: Kupplungsanordnung
- 2: Reibungskupplung
- 3: Antriebsmotor
- 4: Fahrgetriebe
- 5: Kurbelwelle
- 6: Schwungrad
- 7: Kupplungskorb
- 8: Druckplatte
- 9: Mitnehmerscheibe
- 10: Eingangswelle
- 11: Anpressfeder
- 12: Führungshülse
- 13: Ausrücklager
- 14: Kupplungssteller
- 15: Druckraum
- 16: Kolben
- 17: Ausrückhebel
- 18: Steuerungsventil
- 19: Druckleitung
- 20: Drucklosleitung
- 21: Verbindungsleitung
- 22: Steuerleitung
- 23: Steuergerät
- 24: Wegsensor
- 25: Sensorleitung
- 26: Erster Drehzahlsensor
- 27: Sensorleitung
- 28: Zweiter Drehzahlsensor
- 29: Sensorleitung
- 30: Temperatursensor
- 31: Sensorleitung

- M_B: Bremsmoment
- M_K: Kupplungsmoment
- M_K': Kupplungsmoment
- M_Ki: (diskreter) Drehmomentwert
- M_K1: Drehmomentwert der ersten Stützstelle
- M_K2: Drehmomentwert der zweiten Stützstelle
- M_K_max: Maximalmoment
- p_K: Stelldruck
- S1: Schritt 1
- S1': Schritt 1
- S2': Schritt 2
- S3': Sch ritt 3
- x_K: Stellweg, Stellposition
- x_Ki: (diskrete) Stellposition
- x_K1: Stellposition der ersten Stützstelle
- x_K1': Stellposition der ersten abgebildeten Stützstelle
- x_K2: Stellposition der zweiten Stützstelle
- x_K2': Stellposition der zweiten abgebildeten Stützstelle

## Patentansprüche

1. Verfahren zur Ermittlung einer Drehmomentkennlinie einer automatisierten Reibungskupplung, die in einem Antriebsstrang eines Kraftfahrzeugs im Kraftfluss zwischen einem Antriebsmotor (3) und einem Fahrgetriebe (4) angeordnet und im Ruhezustand geschlossen ist, wobei mindestens zwei Stützstellen M_K1(x_K1) und M_K2(x_K2) einer stellwegabhängigen Drehmomentkennlinie M_K = f (x_K) bestimmt werden, von denen mindestens eine Stützstelle an einer Schlupfgrenze der Reibungskupplung (2) ermittelt wird, wobei eine erste Stützstelle M_K1(x_K1) ermittelt wird, indem bei geschlossener Reibungskupplung (2), in Neutral geschaltetem Fahrgetriebe (4) und laufendem Antriebsmotor (3) die Reibungskupplung (2) langsam so weit geöffnet wird, bis ein Abfallen der Drehzahl der Eingangswelle (10) des Fahrgetriebes (4) gegenüber der Drehzahl des Antriebsmotors (3) sensiert wird, und wobei dann das entsprechenden Wertepaar M_K1, x_K1 der ersten Stützstelle mit dem bekannten Bremsmoment M_B der Eingangswelle (10) und der ermittellen Stellposition x_K(M_B) erfasst wird, als Wertepaar der Stützstelle M_K1(x_K1) abgespeichert und nachfolgend für eine Adaption einer vorhandenen Kennlinie M_K' = f (x_K) verwendet wird, **dadurch gekennzeichnet, dass** zur genauen Ermittlung des Schleppmomentes als Bremsmoment M_B der Eingangswelle (10) die Betriebstemperatur des Fahrgetriebes (4) sensiert wird.

2. Verfahren nach Anspruch 1, **dadurch gekennzeichnet, dass** spätestens vor Erreichen der Schlupfgrenze der Reibungskupplung (2) zusätzlich eine auf die Eingangswelle (10) des Fahrgetriebes (4) wirksame Getriebebremse betätigt wird.

3. Verfahren nach Anspruch 1 oder 2, **dadurch gekennzeichnet**, spätestens vor Erreichen der Schlupfgrenze der Reibungskupplung (2) zusätzlich eine Synchronisiervorrichtung einer Gangstufe des Fahrgetriebes. (4) betätigt wird.

4. Verfahren nach wenigstens einem der Ansprüche 1 bis 3, **dadurch gekennzeichnet, dass** eine zweite Stützstelle M 2(x_K2) ermittelt wird, indem die Reibungskupplung im geschlossenen Zustand so lange in Richtung Schließen betätigt wird, bis keine Änderung des Stellweges x_K mehr festgestellt wird, und dass denn das entsprechende Wertepaar M_K2, x_K2 mit dem bekannten Maximalmoment M_K_max und der ermittelten Stellposition x_K = 0 erfasst, als Wertepaar der zweiten Stützstelle M_K2(x_K2) abgespeichert und nachfolgend für die Adaption der vorhandenen Kennlinie M_K' = f(x K) verwendet wird.

5. Verfahren nach Anspruch 4, **dadurch gekennzeichnet, dass** der Wegbereich zwischen den beiden Stützstellen M_K1(x_K1) und M_K2(x_K2) als Arbeitsbereich der Reibungskupplung zur Einstellung von Drehmomentwerten M_Ki(x_Ki) mit M_K1(x_K1) = 0% und M_K2(x K2) = 100% definiert wird.

6. Verfahren nach einem der vorangehenden Ansprüche, **dadurch gekennzeichnet, dass** die erfaßte Stützstelle M K1(x K1) abhängig von dem Schleppmoment der Eingangswelle (10) des Fahrgetriebes (4) korrigiert wird.
(Weiter auf Blatt 15 der ursprünglich eingereichten Unterlagen.)

## Claims

1. Method for determining a torque characteristic curve of an automated friction clutch which is arranged in a drivetrain of a motor vehicle in the power flow between a drive engine (3) and a gearbox (4) and which is closed in the rest state, at least two interpolation nodes M_K1(x_K1) and M_K2(x_K2) of an actuating-travel-dependent torque characteristic curve M_K = f(x_K) being determined, at least one of which interpolation nodes is determined at a slip threshold of the friction clutch (2), a first interpolation node M_K1(x_K1) being determined, when the friction clutch (2) is closed and the gearbox (4) is shifted into neutral and the drive engine (3) is running, by virtue of the friction clutch (2) being slowly opened until a decrease in the rotational speed of the input shaft (10) of the gearbox (4) in relation to the rotational speed of the drive engine (3) is detected, the corresponding value pair M_K1, x_K1 of the first interpolation node then being recorded with the known braking torque M_B of the input shaft (10) and the determined actuating position x_K(M_B), stored as a value pair of the interpolation node M_K1(x_K1), and subsequently used for an adaptation of an existing characteristic curve M_K' = f(x_K), **characterized in that**, for the precise determination of the drag torque as braking torque M_B of the input shaft (10), the operating temperature of the gearbox (4) is detected.

2. Method according to Claim 1, **characterized in that** a gearbox brake which acts on the input shaft (10) of the gearbox (4) is additionally actuated at the latest before the slip threshold of the friction clutch (2) is reached.

3. Method according to Claim 1 or 2, **characterized in that** a synchronization device of a gear stage of the gearbox (4) is additionally actuated at the latest before the slip threshold of the friction clutch (2) is reached.

4. Method according to at least one of Claims 1 to 3, **characterized in that** a second interpolation node M_K2(x_K2) is determined by virtue of the friction clutch, in the closed state, being actuated in the closing direction until no further change in the actuating travel x_K is detected, and **in that** the corresponding value pair M_K2, x_K2 is then recorded with the known maximum torque M_K_max and the determined actuating position x_K = 0, stored as a value pair of the second interpolation node M_K2(x_K2), and subsequently used for the adaptation of the existing characteristic curve M_K' = f(x_K).

5. Method according to Claim 4, **characterized in that** the travel range between the two interpolation nodes M K1(x K1) and M_K2(x_K2) is defined as a working range of the friction clutch for setting torque values M_Ki(x_Ki), where M_K1(x_K1) = 0% and M_K2(x_K2) = 100%.

6. Method according to one of the preceding claims, **characterized in that** the recorded interpolation node M_K1 (x_K1) is corrected as a function of the drag torque of the input shaft (10) of the gearbox (4).

## Revendications

1. Procédé de détermination d'une courbe caractéristique de couple d'un accouplement à friction automatique qui est disposé dans une chaîne motrice d'un véhicule automobile dans le flux des forces entre un moteur d'entraînement (3) et une boîte de vitesses de déplacement (4) et qui est fermé au repos, au moins deux points de référence M_K1 (x_K1) et M_K2(x_K2) d'une courbe caractéristique de couple dépendante de la course de réglage M_K = f(x_K) étant déterminés, parmi lesquels au moins un point de référence est déterminé au niveau d'une limite de patinage de l'accouplement à friction (2), un premier point de référence M_K1 (x_K1) étant déterminé en ouvrant lentement l'accouplement à friction (2) lorsque l'accouplement à friction (2) est fermé, la boîte de vitesses de déplacement (4) se trouve en position neutre et le moteur d'entraînement (3) est en marche, jusqu'à détecter une chute de la vitesse de rotation de l'arbre d'entrée (10) de la boîte de vitesses de déplacement (4) par rapport à la vitesse de rotation du moteur d'entraînement (3) et la paire de valeurs M_K1, x_K1 correspondante du premier point de référence étant ensuite détectée avec le couple de freinage M_B connu de l'arbre d'entrée (10) et la position de réglage x_K(M_B) déterminée, enregistrée en tant que paire de valeurs du point de référence M_K1 (x_K1) et utilisée ensuite pour une adaptation d'une courbe caractéristique M_K' = f (x_K) existante, **caractérisé en ce que** la température de fonctionnement de la boîte de vitesses de déplacement (4) est détectée en vue d'une détermination précise du couple de traction en tant que couple de freinage M_B de l'arbre d'entrée (10).

2. Procédé selon la revendication 1, **caractérisé en ce qu'**en outre un frein d'engrenage qui agit sur l'arbre d'entrée (10) de la boîte de vitesses de déplacement (4) est actionné au plus tard avant d'atteindre la limite de patinage de l'accouplement à friction (2).

3. Procédé selon la revendication 1 ou 2, **caractérisé en ce qu'**en outre un dispositif de synchronisation d'un rapport de la boîte de vitesses de déplacement (4) est actionné au plus tard avant d'atteindre la limite de patinage de l'accouplement à friction (2).

4. Procédé selon au moins l'une des revendications 1 à 3, **caractérisé en ce qu'**un deuxième point de référence M_K2(x_K2) est déterminé en actionnant l'accouplement à friction en position fermée en direction de la fermeture jusqu'à ce qu'aucune modification de la course de réglage x_K ne soit plus constatée, et **en ce que** la paire de valeurs M_K2, x_K2 correspondante est ensuite détectée avec le couple maximum M_K_max connu et la position de réglage x_K = 0 déterminée, enregistrée en tant que paire de valeurs du deuxième point de référence M_K2(x_K2) et utilisée ensuite pour l'adaptation de la courbe caractéristique M_K' = f(x_K) existante.

5. Procédé selon la revendication 4, **caractérisé en ce que** la plage de courses entre les deux points de référence M_K1(x_K1) et M_K2(x_K2) est définie en tant que plage de travail de l'accouplement à friction pour le réglage des valeurs du couple M_Ki(x_Ki), avec M_K1(x_K1) = 0 % et M_K2(x_K2) = 100 %.

6. Procédé selon l'une des revendications précédentes, **caractérisé en ce que** le point de référence M_K1(x_K1) détecté est corrigé en fonction du couple de traction de l'arbre d'entrée (10) de la boîte de vitesses de déplacement (4).
